# EUROPEAN PATENT SPECIFICATION

(11) **EP 2 007 231 B1**
(45) Date of publication and mention of the grant of the patent: **07.12.2011**
(21) Application number: 07732357.4
(22) Date of filing: 10.04.2007
(51) Int. Cl.: A23L 3/26, A23L 2/08, A23B 7/01

(54) **PRODUCE TREATMENT METHOD**
VERFAHREN ZUR BEHANDLUNG VON PRODUKTEN
PROCÉDÉ DE TRAITEMENT DE PRODUITS

(30) Priority: 11.04.2006 GB 0607293; 10.05.2006 GB 0609290
(43) Date of publication of application: 31.12.2008
(73) Proprietor: Scott, Lionel, Hinxton, Saffron Walden Essex CB10 1R (GB)
(72) Inventor: Scott, Lionel, Hinxton, Saffron Walden Essex CB10 1R (GB)
(74) Representative: Wise, Stephen James
(86) International application number: PCT/GB2007/001313
(87) International publication number: WO 2007/128988

(56) References cited:
- WO-A-89/10069
- FR-A1- 2 542 567
- GB-A- 2 402 037
- US-A- 3 578 464

## Description

The present invention relates to a produce treatment method, especially a method for storing fresh food produce and comestibles derived therefrom and for controlling the total viability count and surface pathogen count. In particular, the invention relates to a method for storing fresh produce such as dairy products, meat products, harvested plant parts, harvested fruits, plant cells or harvested plant tissue wherein the total viability count and/or surface pathogen count on the fresh food produce and comestibles derived from it are treated with light of certain wavelengths selected from the visible light spectrum, such as red, blue, and red and blue wavelengths of light, by applying such wavelengths to the said fresh food produce while it is held or stored at a temperature in the range of from -25°C to +45°C, and uses of such wavelengths of light.

Ultraviolet light (and specifically UV-B) is known to have effects on the levels of secondary compounds of the phenyl-propanoid pathway of plants via action on key regulatory enzymes such as phenylalaline ammonia-lyase (Kuhn, D.N. et al (1984) Proc. Natl. Acad.Sci., USA, 81, 1102-1106) and chalcone synthase (Batschauer, A. et al (1996) The Plant Journal 9, 63-69 and Christie, J.M. and Jenkins, G.I. (1996) The Plant Cell 8, 1555-1567). There are many published reports of UV-B stimulation of phenolic compounds, including surface flavonols and flavonoids (Cuadra, P. and Harbome, J.B. (1996) Zeitschrift für Naturforschung 51c, 671-680 and Cuadra, P. et al (1997) Phytochemistry 45, 1377-1383), anthocyanins (Yatsuhashi, H. et al (1982) Plant Physiology 70, 735-741 and Oelmüller, R. and Mohr, H. (1985). Proc. Natl. Acad. Sci., USA 82, 6124-6128) and betacyanins (Rudat, A. and Goring, H. (1995). J. Expl. Bot. 46, 129-134) and these compounds have been implicated both in plant defence (Chappell, J. and Hahlbrock, K. (1984) Nature 311, 76-78 and Guevara, P. et al (1997) Phyton 60, 137-140) and as protection against UV-light (Lois, R. (1994) Planta 194, 498-503; Ziska, L.H. et al (1992) Am. Jnl. Bot. 79, 863-871 and Fiusello, N. et al (1985) Allionia (Turin) 26, 79-88).

FR 2542567 describes the application of blue and/or red light to certain fruits, typically unharvested fruits, at night for periods of long duration measured in days. Furthermore, it seems that certain measurements were made on leaf discs incubated in a 0.1 mole sucrose solution in an incubator. The object of that invention appears to be to alter anthocyanin concentration in the skins of the fruits to make them appear more attractive to the consumer.

There does not appear to be a mention of the use of red and/or blue wavelengths of light for controlling total viability count and/or surface pathogen count.

Although observations have been reported on the effects of certain bands of UV light and of infrared light in altering, typically increasing the levels of certain phytochemicals within plant cells, the available art appears to be silent on the effect of shining red, blue, or a combination of red and blue light at a sufficient light intensity onto the surface of fresh food, such as dairy products, harvested plant parts, plant cells, raw meat, processed meat, raw fish or processed fish with a view to controlling (1) the total viability count and (2) the surface pathogen count under certain storage conditions, such as freezing or refrigeration (i.e. chilling) storage conditions.

A recognised problem associated with harvested plant parts such as edible vegetables and fruits, is that a percentage, for example up to 10%, of harvested fresh produce may be lost as a result of microbial infestation as the fresh produce is taken from the field to supplier to retailer. "Microbial infestation" includes infestation due to bacteria, fungi, yeasts and/or moulds. This loss is termed "spoilage" or "wastage" in the industry.

Dairy products such as cheese suffer from oxidation due in part to the presence of bacteria that live on and in the cheese. Other fresh products such as raw meat, fish and poultry and cooked derivatives thereof also suffer from microbial attack and begin to rot or 'go off' rapidly under conventional refrigeration conditions unless such products are specially treated, for example wrapped in a plastic sheath under vacuum. Other ways in which fresh food produce may be treated to minimise the tvc and/or surface pathogen count includes the addition of chemicals. Such chemicals may have a detrimental effect on taste and may also be hazardous to the health of the consumer over time.

Advantages of the present invention will become apparent from the foregoing description and examples.

It has now been observed that by shining or directing red and/or blue light wavelengths onto fresh produce such as vegetables and fruits, the total viability count and/or surface pathogen count can be substantially reduced and this leads to a concomitant decrease in spoilage and/or improvement in shelf life.

According to the present invention there is provided a method for storing fresh produce at a temperature within the range of from -25°C to +45°C wherein the fresh produce is treated with light wavelengths from the visible light spectrum that comprises blue light, red light or a combination of red light and blue light. Typically, the blue and/or red light is shone onto the fresh produce at an intensity sufficient to cause a reduction in total viability count (tvc) and/or surface pathogen count (spc).

In a further aspect of the present invention there is provided a method for controlling the total viability count of fresh produce being held or stored at a temperature in the range of from -25°C to +45°C wherein at least one wavelength selected from blue light and red light or a combination thereof from the visible spectrum, is shone from at least one light emitting means onto the surface of the fresh produce.

"Fresh produce" for the purposes of the instant invention includes dairy products such as cheese, milk, cream, crème fraiche, and yoghurt, meat such as raw meat, processed meats such as cooked meats, raw fish, processed fish such as cooked fish, harvested plant parts, fruit and plant cells and products made from fresh produce such as so-called ready meals available within retailer outlets such as supermarkets, salad bars and the like. Typically, where such fresh produce is frozen, it may be held within a temperature range of from -15°C to 0°C, preferably from about -10°C to -0.5°C. However, where the fresh produce is stored under freezing conditions, it may be stored at -15,-14,-13,-12,-11,-10,-9,-8,-7,-6,-5,-4,-3,-2,-1, or 0°C, depending on the length of storage envisaged, and the type of fresh produce that is being stored.

Where fresh produce is to be stored at chilling temperatures, it may be stored typically within the range of from -0.5°C to 16°C, or at any chilling temperature within said chilling range, such as at -0.5,0,+1,2,3,4,5,6,7,8,9,10,11,12,13,14, 15 or 16°C depending on the fresh produce that is to be stored, for example, fresh produce that is of plant origin may be stored at a chilling temperature under refrigerating conditions in the range of from -0.5°C to 12°C, typically from 0°C to 10°C, and preferably at a temperature within the range from 0°C to 8°C, such as at 0,1,2,3,4,5,6,7 or 8°C.

Typically, fresh produce that can be held or stored at a temperature such as a freezing and/or a chilling temperature includes harvested plant tissue. Harvested plant tissue can be from any plant such as from an edible plant, and may include harvested vegetable matter including cut plant parts such as broccoli florets, green beans, cabbage heads, bell peppers, tomatoes, aubergines, onions, garlic, lettuce leaf material, celery, and harvested fruits such as apples, pears, mangoes, bananas, citrus fruits such as oranges, pears, lemons and limes, kiwi fruit and other green or unripe fruits, such as unripe tomatoes. Such harvested plant material for storage at chilling temperatures typically includes any form of plastid capable of forming a plant phytochemical on application of light or red and/or blue wavelengths thereto. Examples of such plastids include etioplasts, chloroplasts, and chromoplasts.

The level of intensity of the blue and/or red light that strikes the surface of the fresh produce, may lie in the range of from 5 micro Einsteins +/- 3 micro Einsteins up to 2000 micro Einsteins +/- 250 micro Einsteins; from 5 micro Einsteins +/- 3 micro Einsteins upto 1000 micro Einsteins +/- 200 micro Einsteins; from 5 micro Einsteins +/- 3 micro Einsteins upto 300 micro Einsteins +/- 50 micro Einsteins; from 5 micro Einsteins +/- 3 micro Einsteins upto 100 micro Einsteins +/- 50 micro Einsteins and at any light intensity within the ranges listed herein, depending on design. The blue, red, or combined blue and red light intensity at the fresh produce surface, for example, plant material, from one or more of the said light sources may be in the range of from 5 micro Einsteins +/- 3 micro Einsteins upto 1000 micro Einsteins +/- 250 micro Einsteins or more, but typically, may be within the range of from 5 micro Einsteins +/- 2 micro Einsteins upto 200 micro Einsteins +/- 25 micro Einsteins. Suitably, the range of total red and blue light intensity may be selected from the range 10 micro Einsteins +/- 4 micro Einsteins to about 1000 micro Einsteins +/- 250 micro Einsteins, for example 10 micro Einsteins to 300 micro Einsteins +/- 50 micro Einsteins; 10 micro Einsteins +/- 4 micro Einsteins to 200 micro Einsteins +/- 50 micro Einsteins; 20 micro Einsteins +/- 5 micro Einsteins to 180 micro Einsteins +/- 30 micro Einsteins; 50 micro Einsteins +/-25 micro Einsteins to 200 micro Einsteins +/- 20 micro Einsteins; 40 micro Einsteins +/- 10 micro Einsteins. The skilled addressee will appreciate that any light intensity of blue, red, and/or blue and red light may be used, depending on the fresh produce upon which the light is being shone.

The wavelength of blue light used may be selected from the range of from 410nm to 490nm such that the selected wavelength of blue light is, or wavelengths of blue light are, capable of altering the total viability count, and/or the surface pathogen count found on the fresh produce, such as harvested plant tissue. Typically, the total viability count, and/or the surface pathogen count contained on the fresh produce, such as harvested plant material, is decreased or lowered upon exposure to desired wavelengths of light over a suitable time interval and at a suitable light intensity according to the invention. Examples of blue light wavelength ranges and values used in the method of the invention include from 420nm - 480nm; from 435nm - 465nm; and 450nm +/- 25 nm. Thus, the skilled addressee will appreciate that the wavelength(s) of blue light used in the present invention on plant material such as harvested vegetables or green leaf matter or on green plant cells in culture, such as moss cells e.g. cells of *physcomitrella patens,* according to the method of the invention, constitute wavelengths of blue and/or red light and may include wavelengths of other light as described herein, for example, red and/or blue light may be shone onto fresh produce as described herein, in combination with exposure to natural white light (e.g. from sunlight) or in combination with white light (that is to say, light from the visible spectrum) that is emitted from conventional light sources. For example, certain light emitting diodes (LEDs) emit light having a bias towards blue light emission, such as the LED 333/2UBC/C340, GaN/SiC supplied by Everlight Electronics Co. Ltd. Taipai 236 Taiwan, and in the case of certain white halogen lights eg the General Electric Quartzline EHJ, 250W, 24V light. The first and/or further light source may also be further enriched with red light from a further red light source of a wavelength that lies in the range of from 600nm - 700 nm, for example 650 nm +/-30 nm. The red light intensity of red light striking the target fresh produce, such as harvested plant material, as alluded to herein typically lies in the range of from 1 to 500 microE +/- 50 microEinsteins. Examples of red light intensity striking the fresh produce surface, such as a plant material surface, include 30 microEinsteins +/- 5 micro Einsteins upto 150 microEinsteins +/- 50 micro Einsteins; 50 micro Einsteins +/- 10 micro Einsteins upto 100 micro Einsteins +/- 20 microEinsteins; and the like. The skilled addressee will appreciate that the actual intensity of light to be employed on the fresh produce surface, such as a harvested plant surface will depend on design and the fresh produce of interest.

Furthermore, it is to be understood that the light wavelength or wavelengths employed in the present invention is or are selected from so-called 'cold light' wavelengths but does not constitute infrared wavelengths or UV wavelengths. Thus, the wavelengths or bands of light used lie in the range of from 420nm to 480nm for blue light; and/or 600 nm to 700 nm for red light or in any combination of light wavelengths therein depending on design. Examples of the red wavelength used in the present invention may be selected from a wavelength within the range of from 600nm to 700nm; 620nm to 680 nm; 625nm to 670 nm; or at about 650nm +/- 15nm. Red or blue light or a combination of both red and blue light at any given energy ratio may be employed in the method of the invention. For instance, the energy ratio of Blue light : Red light may be selected from within the range of from 10:1 to 1:10, 9:1 to 1:9, 8:1 to 1:8, 7:1 to 1:7, 6:1 to 1:6, and 5:1 to 1:5, such as 5:2 to 2:5, 5:3 to 3:5, or 5:4 to 4:5. Other Blue light: Red light ratios may be selected from within the ranges 4:1 to 1:4, 3:1 to 1:3, 2:1 to 1:2, and 1:1 and any permutation within these ranges depending on design. The actual red, blue or blue:red light or red:blue light energy ratio selected may depend on the fresh produce to be exposed, and design. Typically, for an energy ratio of about 1:1, the blue light intensity is about 15 micro Einsteins +/- 3 micro Einsteins and the red light intensity is about 25 micro Einsteins +/- 1 micro Einstein. Naturally, the skilled addressee will appreciate that depending on the fresh produce of interest, such as dairy products or plant cells or plant tissue employed, the length of time that the fresh produce is exposed to light of wavelengths outlined herein will alter with design. Suitably, the length of time that fresh produce such as plant cells or plant tissue may be exposed to wavelengths used in the present invention for an effect on log levels of total viability count to be observed is for a pre-determined time interval. The time interval may be selected from a continuous time interval or a pulsed time interval. Typically, the time interval is a pulsed time interval of a pre-determined frequency that is spread over a time period that is longer in duration than the said pulsed time interval. The time period can be of any length of duration and can be up to 96 hours or more in duration. When a pulsed time interval is employed, the pulsed time interval may be of any length and may lie, for example in the range of from 1 second up to 360 minutes; 10 minutes to 360 minutes; 30 minutes to 360 minutes; 1 minute to 60 minutes; 5 minutes to 40 minutes; 10 to 30 minutes; 10 to 20 minutes; 15 minutes and the like depending on design, the fresh produce of interest such as that of harvested palatable plant parts, and requirement. Naturally, the man skilled in the art will appreciate that there will be a time interval between light pulses during which the described light sources will not be shining onto the plant material of interest. Furthermore, the man skilled in the art will appreciate that the said time intervals between separate light pulses may be shorter in duration than the pulsed light interval, of the same duration as the pulsed light interval or of longer duration than the light pulse interval. Typically, the total viability count and/or surface pathogen count is depressed, that is to say, is reduced on the application of light to the fresh produce of interest over time intervals as described herein, such as plant tissue or plant cell culture or plant cells as alluded to herein.

In a further variant in the operating of the method of the instant invention, the light from the said one or more light sources is shone onto the plant cell or plant tissue surface for a predetermined time interval for a continuous time interval. The continuous time interval can be of any length of time up to 96 hours or more in duration. Examples of continuous time intervals include up to 168 hours; 144 hours; 96 hours; and 72 hours and the like. Examples of ranges from which continuous intervals may be selected include up to 168 hours, 30 minutes to 96 hours; 30 minutes to 96 hours; 30 minutes to 48 hours; 30 minutes to 24 hours; 30 minutes to 12 hours; 30 minutes to 8 hours, 30 minutes to 4, 5, 6 or 7 hours and the like. Naturally, the man skilled in the art will also appreciate that the number of minutes or hours will be selected depending on design, fresh produce of interest such as plant species from which the plant part is harvested, and requirement.

In a further aspect the invention can be employed on any plant tissue that is also capable of responding to exposure to wavelengths of light as outlined herein. Preferably, the plant tissue comprises tissue that is capable of photosynthesis and/or blue and red light adsorption. Plant material that can be used in the method of the invention includes all green vegetables and green seeds, e.g. peas, green beans, spinach, snow peas (mange tout) species from the *Brassica oleracea* such as broccoli, green cabbage, red cabbage, Brussels sprouts, kohlrabi, cauliflower, white cabbage, and the like, and all plant material, such as green plant material, for example, cells comprising chlorophyll, green stems, calyx, leaves, and the like that is able to respond to wavelengths of light as hereindescribed. Other plant material that may be treated in accordance with methods of the invention may be from non-vegetable sources such as plants of the order Taxaceae as described herein, tea leaves, and of cells grown in plant cell cultures in bioreactors such as moss cells and tissues (e.g. protonema) from physcomitrella patens, and other plant cell cultures e.g. callus cell cultures, cultures of lemnospora species, algae or even somatic embryo clusters and fruits such as tomatoes, apples, grapes, unripe (green) bananas, mangoes, citrus fruits such as lemons, oranges, limes and grapefruit, kiwi fruit, pineapples, and the like. Naturally, the man skilled in the art will appreciate that "fruit" is used in the context of the shopper at the supermarket or greengrocer.

In a further embodiment, there is provided use of blue, red, or a combination of at least blue and red light in the control of surface pathogen count or total viability count (tvc) on harvested live plant cells or harvested plant tissue. Naturally, the skilled addressee will appreciate that light as described herein and employed in the instant invention may alter the phytochemical profile of a plant cell or plant tissue, such as a harvested tissue, at temperatures above freezing temperature. Preferably, the combination of light sources includes red light of a wavelength that may be selected from a wavelength within the range of from 600nm - 700nm, preferably from 620nm - 680 nm, more preferably from 625nm - 670 nm, and generally at about 650nm +/- 15nm. In a preferred embodiment, the said plant cells or plant tissue is located under cover. 'Under cover' means that the cells or tissue is located under cover when exposed, for example, during a food processing step prior to further processing such as freezing or canning or heat treating or cooking as alluded to hereinbelow.

The skilled addressee will also appreciate that the method of the invention may be employed at any temperature ranging from -25°C to +45°C, such as from +1 degree Centigrade to +45 degrees Centigrade. Commonly, the operating temperature will lie in the range of from about + 2 degrees Centigrade to about room temperature (+ 25 degrees Centigrade). Where advantage is to be gained from heat shocking the harvested plant cells or harvested plant tissue, the method of the invention may be employed at a temperature within the range of from + 35 degrees Centigrade to about +45 degrees centigrade, for example, at +40, +41 ,+42, +43, +44 or +45 degrees Centigrade, for a period of from a few seconds, for example 30 seconds up to a few minutes, for example, 1, 2, 3, 4, 5, 6, 7, 8, 9, 10, 11, 12, 13, 14, or 15 minutes or more depending on plant tissue type and design. Naturally, the skilled addressee will appreciate that the heat shock temperature should be such that it does not deleteriously affect the general viability of the plant material that is subjected to a heat shock step.

'Cover' is to be understood as a general term and may be taken to mean a receptacle in which the plant material or plant cells may be placed, for example a closed container with a built-in light source therein, such as a refrigerator unit comprising an inbuilt light source that can be activated on demand for a pre-determined time interval. Thus, under cover may include a cooling means, such as a conventional refrigerator (a domestic refrigerator or a commercial refrigerator) comprising a light source capable of emitting light selected from the wavelengths of light as hereindescribed. Alternatively, 'under cover' may be taken to mean a processing factory wherein harvested plant material is exposed to one or more light sources producing light of appropriate wavelength or wavelengths over a short period of time during the processing operation, such as canning, freezing plant material, or immediately prior to the cooking of foods for canning or for baby food manufacture eg purees and the like, and further processed foods such as soups, vegetable-based sauces and the like.

"Plant cells" and "harvested plant parts" also includes those plant parts or tissues which display an aromaticity which is detectable by the human olfactory senses when cut or harvested. Such plants may display the aromaticity naturally, for example in the case of cut herbs, from the cut stalks or leaves. The plant cells or tissue or parts include members of the Labiatae, such as the broad-leafed herbs. Suitable examples of broad-leafed herbs include basil, oregano, sage, coriander, dill, marjoram and thyme. Other herbs, such as cut herbs that may benefit from being treated according to the present invention include chives, garlic, bay leaf, lemon balm, mint, lavender, parsley, the fennels, eg bronze fennel and common fennel, and the like. A more complete list of common herbs to which the invention can be applied is to be found in Taylors Guide to Herbs 1995, Eds. Buchanan R. & Tenebaum F. Houghton Mifflin Co. New York: the teaching of this guide reference is hereby incorporated into the teaching of the present specification. Naturally, the skilled addressee will appreciate that the plant cells or plant parts under refrigeration conditions or warmer conditions are alive when exposed to light in accordance with the present invention and are capable of responding to the application of the light stimulus as outlined herein.

Plant cells or plant parts may be harvested at any stage of growth so long as the harvested plant cells or tissue are capable of responding to the application of light of wavelength and duration as outlined herein. In a preferred embodiment, the harvested plant cells or tissue of broad - leaf herbs can be exposed to wavelengths of light used in the present invention from the 3 to 4 leaf stage and most preferably in the case of culinary herbs such as basil, the 5-leaf stage. It is envisaged that plant cells and/or tissue such as culinary herbs and green vegetables are most usefully exposed as herein-described immediately before processing (e.g. freeze drying, adding to processed foods such as sauces, soups, canned goods and the like), that is to say after the harvesting of cuttings from such plants and/or the provision of young plants for processing e.g. as dried herbs. Dried herbs treated with light as outlined herein immediately post-harvest, for a short period of time, particularly those measured at the 5-leaf stage, are considered to display an increased aromaticity relative to controls which are not exposed to light as described herein.

The artificial light source or sources can be of any suitable conventional type, such as a light emitting diode or even, where appropriate, a light source comprising filters that let through light of the desired wavelength(s). The light source may be placed at any distance from the harvested material provided that the light energy used is sufficient to influence the total viability count and/or surface pathogen count, typically to cause a decrease in number, for example, by at least a factor of log 1, log 2, log 3 or more or any log value inbetween. It is preferable to locate the light source in a position which affords the greatest level of exposure per square unit (e.g. cm², m² etc.) of the harvested plant material. Suitably, depending on the size of the covered area, for example that of a processing compartment in a processing factory, or of a refrigerator (e.g. a domestic refrigerator or a commercial refrigerator) or other container such as a microwave oven or magnetron fitted with a suitable light source capable of being manually or automatically activated, for example, by employing a timing means and thereby emitting wavelengths of light as indicated herein and described herein. Alternatively, an independent container specifically designed for exposing plant parts or cells to light of wavelengths as described herein may be employed. In a further alternative, the number of light sources may be as little as one to a whole 'battery' of light sources arranged in series and/or in parallel, for example, in a food processing factory setting, each light source being suitably distanced one from the other at appropriate intervals in such a manner as to effect exposure of the plant material to light of wavelengths as described herein which results in a significant alteration in the level of total viability count and/or surface pathogen count found thereon. A "significant alteration in level of surface pathogens" typically means a reduction in numbers of from about log 1 to log 3 or more, for example about log 2, as compared to control using UK accredited standard tests (UKAS) that are employed by the industry, details being available from laboratories such as Eclipse Scientific Group, Chatteris, Cambs, UK.

Apparatuses suitable for carrying out the method of the invention are described in granted British patent GB 2402037, and British patent application number 06 23 636.8.

It is to be understood that the teaching of all references cited herein is incorporated in the instant specification.

The invention will now be described with reference to the following examples. It is to be understood that the examples are not to be viewed as limiting the scope of the invention in any way.

### Examples Section

**Table 1**

| | **TBC after 96 h** |
|---|---|
| **Sample** | **Colony Units counts/10 mg FW** |
| **Control, ambient light** | 1.75 x10E6 |
| **Blue light 60 microE 4h** | 1.05 x 10E5 |
| **Red light 100 microE 4h** | 7.63 x10E4 |
| **Red and Blue 160 microE 4h** | 5.71 x10E4 |

### 1) Baby Spinach leaves (red and blue light)

Results are shown in Table 1.

Light intensities were measured as being the light intensity striking the surface of the plant material using a light meter (e.g. LI-COR quantum radiometer photometer, model LI 185, LI-COR Corporation, USA).

Spinach leaves were infected with ca 3500 ± 500 bacteria of *Pseudomonas siringae* DC3000 suspended in 0.2 ml of 10 mM MgCl₂ 8 hours after exposure to the given light conditions using blue light LEDs (333/2UBC/C340, GaN/SiC supplied by Everlight Electronics Co. Ltd. Taipai 236 Taiwan) and red light LEDs (Futur LED Red Type R210R2-M, Swarco Austria). 96 h later, after having been exposed to ambient white fluorescence light in a 12 h photoperiod in 15 degrees Centigrade ± 3 degrees in 60% relative humidity titration of TBC was performed.

### C. Peas

Peas were treated as described for the spinach samples provided above. Alterations in the levels of *Pseudomonas siringae* DC3000 are observed.

### D. Green cabbage

Green cabbage obtained from a supermarket was treated as described for the spinach and pea samples provided above. Alterations in the levels of *Pseudomonas siringae* DC3000 are observed.

### E. Green beans

Green beans obtained from a supermarket were treated as described in the above examples. Alterations in the levels of *Pseudomonas siringae* DC 3000 are observed.

### F. Snow peas

Snow peas (mange tout) obtained from a supermarket were treated as described in the examples above. Alterations in the levels of *Pseudomonas siringae* DC 3000 are observed.

**Table 2**

| | **CFU after 96 h** |
|---|---|
| **Sample** | **Colony Forming Units counts / 10 mg FW** |
| **Control, ambient light** | 1.75 x10E6 |
| **Blue light 60 microE 4h** | 1.05 x 10E5 |
| **Red light 100 microE 4h** | 5.63 x10E4 |
| **Red and Blue 160 microE 4h** | 7.71 x10E4 |

### 1) Baby Spinach leaves and CFU after infection with P. syringae (red, blue, and red and blue light)

Results are shown in Table 2.

Light intensities were measured as being the light intensity striking the surface of the plant material using a light meter (e.g. LI-COR quantum radiometer photometer, model LI 185, LI-COR Corporation, USA).

Plant tissues were infiltrated with *P. syringae* strains that had been grown overnight in peptone/yeast extract/glycerol medium (NYGB) at 28 °C (Turner et al., 1984, Mol. Gen. Genet. 195, 101-107) medium and then washed twice with 10 mM MgCl₂. The bacterium strain used in this study was *Pseudomonas syringae* pv. tomato DC3000. An appropriate dilution, 17.500 bacteria in 1 mL of 10 mM MgCl₂ was inoculated into the underside of intact leaves using plastic syringe without needle (Swanson et al., 1988, Mol. Plant-Microbe Interacts. 1, 5-9). Spinach leaves were infected with ca 3500 ± 500 bacteria of *Pseudomonas siringae* DC3000 suspended in 0.2 ml of 10 mM MgCl₂ 8 hours after exposure to the given light conditions using blue light LEDs (333/2UBC/C340, GaN/SiC supplied by Everlight Electronics Co. Ltd. Taipai 236 Taiwan) and red light LEDs (Futur LED Red Type R210R2-M, Swarco Austria). 96 h later, after having been exposed to ambient white fluorescence light in a 12 h photoperiod in 15 degrees Centigrade ± 3 degrees in 65% relative humidity titration of CFU was performed as described above.

### 2) Baby Spinach leaves and TVC (red, blue, and red and blue light)

**Table 3**

| | **TVC after 72h incubation in 30° C** |
|---|---|
| **Sample** | **TVC counts / 1 g FW** |
| **Control, ambient light** | 8.55 x10E5 |
| **Blue light 60 microE 4h** | 1.05 x 10E4 |
| **Red light 100 microE 4h** | 6.63 x10E3 |
| **Red and Blue 160 microE 4h** | 4.25 x10E3 |

In the second experiment (results are presented in Table 3) Spinach leaves bought from a supermarket are exposed to the given light conditions using blue light LEDs (333/2UBC/C340, GaN/SiC supplied by Everlight Electronics Co. Ltd. Taipai 236 Taiwan) and red light LEDs (Futur LED Red Type R210R2-M, Swarco Austria). 8 h later, after having been exposed to ambient white fluorescence light in 15 degrees Centigrade ± 3 degrees; in 60% relative humidity titration of Total Viable Count (TVC) is performed. 10 g of fresh weight plant or fruit tissue is homogenized in 90ml of MRD to produce an initial dilution of the sample of 1:10. MRD consists of Peptone 1g and Sodium Chloride 8.5g per litre of de-ionised water. 1 ml portions of the homogenate are inoculated into empty sterile Petri dishes. With high TVC count, 1ml portions of the homogenate are added to 9ml volumes of MRD to produce further 1:10 serial dilutions. 1ml volumes of the dilutions are then inoculated into Petri dishes. Approx 18ml of molten SPCA at 50°C is poured into each plate, mixed and allowed to solidify at room temperature. SPCA constitutes Yeast Extract 2.5g, Pancreatic Digest of Caesein 5g, Glucose 1g, Bacteriological Agar 15g per litre of de-ionised water. The solidified plates are incubated at 30°C for 3 days after which plates with colonies in the range 30-300 are counted and multiplied by the dilution factor of the plate to give the number of colony forming units per gram (cfu/g) of the sample.

### 3. Peas

Peas obtained from a supermarket are treated as described for the spinach samples provided above in the second experiment (Table 3). Alterations in the TVC levels are observed.

### 4. Green cabbage

Green cabbage obtained from a supermarket is treated as described for the spinach (experiment 1 and 2) and pea (experiment 2) samples provided above. Alterations as in spinach and pea in the CFU of *Pseudomonas siringae* DC3000; and TVC are observed.

### 5. Green beans

Green beans obtained from a supermarket are treated as described for the spinach samples provided above in the second experiment (Table 3). Alterations in the TVC levels are observed.

### 6. Snow peas

Snow peas (mange tout) obtained from a supermarket are treated as described for the spinach samples provided above in the second experiment (Table 3). Alterations in the TVC levels are observed.

### 7. Apples

Apples obtained from a supermarket are treated as described for the spinach samples provided above in the second experiment (Table 3). Alterations in the TVC levels are observed.

### 8. Oranges

Oranges obtained from a supermarket are treated as described for the spinach samples provided above in the second experiment (Table 3). Alterations in the TVC levels are observed.

### 9. Kiwi fruits

Kiwi fruits obtained from a supermarket are treated as described for the spinach samples provided above in the second experiment (Table 3). Alterations in the TVC levels are observed.

### 10. Cheese (cheddar)

Cheese is obtained from a supermarket and treated as described above in the second experiment except that the cheese is fractionated and then homogenised. Alterations in TVC are observed.

### 11. Raw meat (fillet steak)

Fillet steak (beef) is obtained from a supermarket and treated as described above in the second experiment except that the meat is homogenised using conventional procedures. Alterations in TVC are observed.

### 12. Poultry (chicken)

Chicken breasts are obtained from a supermarket and treated as described above in the second experiment except that the meat is homogenised using conventional procedures. Alterations in TVC are observed.

### 13. Fish (halibut)

Halibut fillets are obtained from a supermarket and treated as described above in the second experiment except that the fish is .homogenised using conventional procedures. Alterations in TVC are observed.

## Claims

1. A method for storing fresh produce at a temperature within the range of from -25°C to +45°C, comprising the step of controlling the total viability count of the stored produce by treating the produce with light of at least one wavelength, which is selected from the wavelengths of blue light, red light and a combination of red and blue light, in the visible light spectrum.

2. A method according to claim 1, wherein the step of treating comprises shining the said light from at least one light-emitting means onto the surface of the fresh produce.

3. A method according to claim 1 or claim 2, wherein the fresh produce is selected from dairy products, meat, fish, poultry and harvested plant parts.

4. A method according to any one of claims 1 to 3, wherein the fresh produce is held at a temperature in the range of from -25°C to 0°C.

5. A method according to claim 4, wherein the temperature range is from -15°C to 0°C.

6. A method according to any one of claims 1 to 3, wherein the fresh produce is held at a temperature in the range of from -0.5°C to 16°C.

7. A method according to claim 6, wherein the temperature is in the range of from 0°C to 10°C.

8. A method according to any one of the preceding claims, wherein the fresh produce is harvested plant material.

9. A method according to any one of the preceding claims, wherein the light intensity of light striking the fresh produce surface lies in the range of 5 micro Einsteins +/- 3 micro Einsteins to 2000 micro Einsteins +/- 250 micro Einsteins.

10. A method according to any one of the preceding claims, wherein the blue light wavelength lies in the range of from 420nm to 480nm.

11. A method according to any one of claims 1 to 9, wherein the red light wavelength lies in the range of from 600nm to 700nm.

12. A method according to any one of the preceding claims, wherein the light is a combination of blue light and red light and the energy ratio of blue light : red light lies in the range of from 10:1 to 1:10.

13. A method according to any one of the preceding claims, comprising shining the light from one or more light-emitting means onto the fresh produce surface for a predetermined time interval.

14. A method according to claim 13, wherein the said time interval is selected from a pulsed or a continuous time interval.

15. A method according to any one of the preceding claims, wherein the fresh produce is selected from edible plant parts such as vegetable parts, salad plant parts and fruits.

16. A method according to claim 15, wherein the fresh produce is selected from vegetable matter including cut plant parts from edible Brassica plants,such as broccoli florets, cauliflower florets, leafy brassica plants such as green cabbage, white cabbage, and red cabbage, lettuce, celery, bell peppers, tomatoes, green beans, mange tout, asparagus, cabbage heads, harvested fruits such as apples, pears, mangoes, bananas, citrus fruits such as oranges, pears, lemons and limes, kiwi fruit and other green or unripe fruits, such as unripe tomatoes.

17. A method according to any one of claims 1 to 14, wherein the fresh produce is selected from green stems, calyx, and leaves of higher order plants, algal cells, moss protonema and plant cell cultures of edible or unpalatable higher and/or lower plant species.

18. A method for storing harvested plant tissue at a temperature within the range of from -25°C to +45°C, comprising the step of controlling the total viability count of the harvested plant tissue by treating the harvested plant tissue with light of at least one wavelength, which is selected from the wavelengths of blue light, red light and a combination of red and blue light, in the visible light spectrum.

19. A method according to claim 18, wherein the control of the total viability count alters the surface pathogen count of the harvested plant tissue.

20. A method according to claim 18 or 19, wherein the light energy causes the total viability count to be reduced by an order of magnitude of at least log 1.

21. A method according to claim 20, wherein the total viability count is reduced by an order of magnitude of at least log 1.5.

22. A method according to claim 21, wherein the total viability count is reduced by an order of magnitude of at least log 2.

## Patentansprüche

1. Verfahren zum Lagern von Frischprodukten bei einer Temperatur im Bereich von -25°C bis +45°C, umfassend den Schritt Kontrollieren der Gesamtlebensfähigkeitzahl der gelagerten Produkte durch deren Behandlung mit Licht mindestens einer Wellenlänge im sichtbaren Lichtspektrum, die aus den Wellenlängen blaues Licht, rotes Licht und einer Kombination aus rotem und blauem Licht ausgewählt wird.

2. Verfahren nach Anspruch 1, wobei der Behandlungsschritt das Beleuchten der Oberfläche der Frischprodukte mit dem Licht von mindestens einem Leuchtmittel umfasst.

3. Verfahren nach Anspruch 1 oder Anspruch 2, wobei die Frischprodukte aus Milchprodukten, Fleisch, Fisch, Geflügel und geernteten Pflanzenteilen ausgewählt werden.

4. Verfahren nach einem der Ansprüche 1 bis 3, wobei die Frischprodukte bei einer Temperatur im Bereich von -25°C bis 0°C aufbewahrt werden.

5. Verfahren nach Anspruch 4, wobei der Temperaturbereich -15°C bis 0°C beträgt.

6. Verfahren nach einem der Ansprüche 1 bis 3, wobei die Frischprodukte bei einer Temperatur im Bereich von -0,5°C bis 16°C aufbewahrt werden.

7. Verfahren nach Anspruch 6, wobei der Temperaturbereich 0°C bis 10°C beträgt.

8. Verfahren nach einem der vorhergehenden Ansprüche, wobei es sich bei den Frischprodukten um geerntetes Pflanzenmaterial handelt.

9. Verfahren nach einem der vorhergehenden Ansprüche, wobei die Lichtintensität des auf die Frischproduktoberfläche fallenden Lichts im Bereich von 5 mikro-Einstein +/- 3 mikro-Einstein bis 2000 mikro-Einstein +/- 250 mikro-Einstein liegt.

10. Verfahren nach einem der vorhergehenden Ansprüche, wobei die Wellenlänge des blauen Lichts im Bereich von 420 nm bis 480 nm liegt.

11. Verfahren nach einem der Ansprüche 1 bis 9, wobei die Wellenlänge des roten Lichts im Bereich von 600 nm bis 700 nm liegt.

12. Verfahren nach einem der vorhergehenden Ansprüche, wobei es sich bei dem Licht um eine Kombination aus blauem Licht und rotem Licht handelt und das Energieverhältnis von blauem Licht : rotem Licht im Bereich von 10:1 bis 1:10 liegt.

13. Verfahren nach einem der vorhergehenden Ansprüche, umfassend das Beleuchten der Frischproduktoberfläche mit dem Licht von einem oder mehreren Leuchtmitteln über ein vorbestimmtes Zeitintervall.

14. Verfahren nach Anspruch 13, wobei das Zeitintervall aus einem gepulsten oder einem kontinuierlichen Zeitintervall ausgewählt wird.

15. Verfahren nach einem der vorhergehenden Ansprüche, wobei die Frischprodukte aus essbaren Pflanzenteilen wie Gemüseteilen, Salatpflanzenteilen und Obst ausgewählt werden.

16. Verfahren nach Anspruch 15, wobei die Frischprodukte aus Gemüsematerial einschließlich geschnittenen Pflanzenteilen von essbaren Brassica-Pflanzen wie Brokkoliröschen, Blumenkohlröschen, Blatt-Brassica-Pflanzen wie Grünkohl, Weißkohl und Rotkohl, Kopfsalat, Stangensellerie, Paprikaschoten, Tomaten, grünen Bohnen, Zuckerschoten, Spargel, Kohlköpfen, geerntetem Obst wie Äpfeln, Birnen, Mangos, Bananen, Zitrusfrüchten wie Orangen, Zitronen und Limonen, Kiwis und anderen grünen oder unreifen Früchten wie unreifen Tomaten ausgewählt werden.

17. Verfahren nach einem der Ansprüche 1 bis 14, wobei die Frischprodukte aus grünen Stängeln, Calyx und Blättern von Pflanzen höherer Ordnung, Algenzellen, Moos-Protonema und Pflanzenzellenkulturen von essbaren oder ungenießbaren höheren und/oder niedrigeren Pflanzenspezies ausgewählt werden.

18. Verfahren zum Lagern von geerntetem Pflanzengewebe bei einer Temperatur im Bereich von -25°C bis +45°C, umfassend den Schritt Kontrollieren der Gesamtlebensfähigkeitzahl des geernteten Pflanzengewebes durch dessen Behandlung mit Licht mindestens einer Wellenlänge im sichtbaren Lichtspektrum, die aus den Wellenlängen blaues Licht, rotes Licht und einer Kombination aus rotem und blauem Licht ausgewählt wird.

19. Verfahren nach Anspruch 18, wobei die Kontrollierung der Gesamtlebensfähigkeitzahl die Oberflächenpathogenzahl des geernteten Pflanzengewebes verändert.

20. Verfahren nach Anspruch 18 oder 19, wobei die Lichtenergie die Reduzierung der Gesamtlebensfähigkeitzahl um eine Größenordnung von mindestens log1 verursacht.

21. Verfahren nach Anspruch 20, wobei die Gesamtlebensfähigkeitzahl um eine Größenordnung von mindestens log1,5 reduziert wird.

22. Verfahren nach Anspruch 21, wobei die Gesamtlebensfähigkeitzahl um eine Größenordnung von mindestens log2 reduziert wird.

## Revendications

1. Procédé de stockage d'un produit frais à une température de -25 °C à +45 °C, comprenant l'étape qui consiste à contrôler la numération totale des cellules viables (Total Viability Count ou TVC) du produit stocké par traitement du produit avec de la lumière d'au moins une longueur d'onde, laquelle est sélectionnée parmi les longueurs d'onde de la lumière bleue, de la lumière rouge, et une combinaison de lumière bleue et de lumière rouge, dans le spectre correspondant à la lumière visible.

2. Procédé selon la revendication 1, dans lequel l'étape de traitement comprend l'illumination de la surface du produit frais par ladite lumière provenant d'au moins un moyen photo-émetteur.

3. Procédé selon la revendication 1 ou 2, dans lequel le produit frais est sélectionné parmi les produits laitiers, la viande, le poisson, la volaille et des parties de plantes récoltées.

4. Procédé selon l'une quelconque des revendications 1 à 3, dans lequel le produit frais est maintenu dans une plage de températures de -25 °C à 0 °C.

5. Procédé selon la revendication 4, dans lequel la plage de températures est de -15 °C à 0 °C.

6. Procédé selon l'une quelconque des revendications 1 à 3, dans lequel le produit frais est maintenu dans une plage de températures de -0,5 °C à 16 °C.

7. Procédé selon la revendication 6, dans lequel la plage de températures est de 0 °C à 10 °C.

8. Procédé selon l'une quelconque des revendications précédentes, dans lequel le produit frais est un matériau végétal récolté.

9. Procédé selon l'une quelconque des revendications précédentes, dans lequel l'intensité lumineuse de la lumière frappant la surface du produit frais est de 5 microEinsteins ± 3 microEinsteins à 2 000 microEinsteins ± 250 microEinsteins.

10. Procédé selon l'une quelconque des revendications précédentes, dans lequel la longueur d'onde de la lumière bleue est de 420 nm à 480 nm.

11. Procédé selon l'une quelconque des revendications 1 à 9, dans lequel la longueur d'onde de la lumière rouge est de 600 nm à 700 nm.

12. Procédé selon l'une quelconque des revendications précédentes, dans lequel la lumière est une combinaison de lumière bleue et de lumière rouge et le rapport énergétique de la lumière bleue contre la lumière rouge est de 10:1 à 1:10.

13. Procédé selon l'une quelconque des revendications précédentes, comprenant l'illumination de la surface du produit frais par la lumière provenant d'un ou plusieurs moyens photo-émetteurs pendant un intervalle de temps prédéterminé.

14. Procédé selon la revendication 13, dans lequel ledit intervalle de temps est sélectionné parmi un intervalle de temps pulsé ou un intervalle de temps continu.

15. Procédé selon l'une quelconque des revendications précédentes, dans lequel le produit frais est sélectionné parmi des parties de plantes comestibles telles que des parties de légumes, des parties de plantes à salades et des fruits.

16. Procédé selon la revendication 15, dans lequel le produit frais est sélectionné parmi des matières végétales comprenant des parties de plantes coupées provenant de plantes comestibles de la famille Brassica, telles que les fleurs de brocoli, les fleurs de chou-fleur, les plantes à feuilles de la famille Brassica telles que le chou vert, le chou blanc et le chou rouge, la laitue, le céleri, les poivrons, les tomates, les haricots verts, les mange-tout, les asperges, les choux pommés, les fruits récoltés tels que les pommes, les poires, les mangues, les bananes, les agrumes tels que les oranges, les citrons et les citrons verts, les kiwis et d'autres fruits verts ou non parvenus à maturité, tels que les tomates vertes.

17. Procédé selon l'une quelconque des revendications 1 à 14, dans lequel le produit frais est sélectionné parmi des tiges vertes, des calices et des feuilles de plantes d'ordres végétaux supérieurs, des cellules d'algues, des protonémas de mousses et des cultures de cellules végétales d'espèces végétales comestibles ou inappétentes d'ordres végétaux supérieurs et/ou inférieurs.

18. Procédé de stockage d'un tissu végétal récolté dans une plage de températures de -25 °C à +45 °C, comprenant l'étape qui consiste à contrôler la numération totale des cellules viables du tissu végétal récolté en traitant le tissu végétal récolté avec de la lumière d'au moins une longueur d'onde, laquelle est sélectionnée parmi les longueurs d'onde de la lumière bleue, de la lumière rouge, et une combinaison de lumière bleue et de lumière rouge, dans le spectre correspondant à la lumière visible.

19. Procédé selon la revendication 18, dans lequel le contrôle de la numération totale des cellules viables modifie la numération des pathogènes de surface du tissu végétal récolté.

20. Procédé selon la revendication 18 ou 19, dans lequel l'énergie lumineuse entraîne une réduction de la numération totale des cellules viables dans un ordre de grandeur d'au moins log 1.

21. Procédé selon la revendication 20, dans lequel la numération totale des cellules viables est réduite dans un ordre de grandeur d'au moins log 1,5.

22. Procédé selon la revendication 21, dans lequel la numération totale des cellules viables est réduite dans un ordre de grandeur d'au moins log 2.
